# EUROPÄISCHE PATENTSCHRIFT

(11) **EP 0 556 459 B1**
(45) Veröffentlichungstag und Bekanntmachung des Hinweises auf die Patenterteilung: **15.01.1997**
(21) Anmeldenummer: 92120015.0
(22) Anmeldetag: 25.11.1992
(51) Int. Cl.: A01B 3/46

(54) **Aufsattel- oder Anhänge-Drehpflug**
Hitchable or trailable reversible plough
Charrue réversible attelable ou accrochable

(30) Priorität: 21.02.1992 DE 9202278 U; 29.04.1992 DE 9205779 U
(43) Veröffentlichungstag der Anmeldung: 25.08.1993
(73) Patentinhaber: Rabewerk GmbH + Co., 49152 Bad Essen (DE)
(72) Erfinder: Albers, Heinrich, Dipl.-Ing., W-4515 Bad Essen (DE); Becker, Ignaz, Dipl.-Ing., W-4994 Pr. Oldendorf (DE); Reker, Stefan, Dipl.-Ing., W-4508 Bohmte 1 (DE)
(74) Vertreter: Missling, Arne, Dipl.-Ing.

(56) Entgegenhaltungen:
- EP-B- 0 297 969
- DE-U- 9 205 779

## Beschreibung

Die Erfindung betrifft einen Aufsattel- oder Anhänge-Drehpflug nach dem Oberbegriff des Anspruches 1. Ein derartiger Pflug ist aus der EP-B1-297 969 bekannt.

Im speziellen betrifft die Erfindung lange Aufsattel- bzw. Anhänge-Drehpflüge, welche einen Karren oder ein Hinterrad aufweisen, welches von einem Stabilisator gehalten und in der hinteren Hälfte der Pfluglänge angeordnet ist. Um eine Bodenanpassung eines langen Pfluges zu ermöglichen und um Änderungen der Arbeitstiefe des letzten Pflugkörpers zu vermeiden, ist es, beispielsweise aus der EP-B1-297 969 bekannt, im Bereich der Abstützung des Pfluges durch das Hinterrad ein Gelenk einzufügen und am hinteren Pflugende ein Tiefen-Führungsrad anzubringen. Der vordere Pflugteil wird somit an seinem vorderen Ende vom Schlepper und an seinem hinteren Ende von dem Hinterrad geführt, während der hintere Pflugteil an seinem vorderen Ende von dem Hinterrad und an seinem hinteren Ende von dem Tiefen-Führungsrad oder auch von Schleifsohlen der Pflugkörper abgestützt ist. Es ist somit möglich, die letzte Furche, welche gleichzeitig die Führung für die Schlepperräder während des nächsten Bearbeitungsganges bildet, mit einer konstanteren Tiefe auszubilden. Ähnliche Lösungen sind aus DE-OS 22 48 186 aus dem deutschen Gebrauchsmuster 72 02 127 und der FR-A-2 201 022 bekannt. Diese Lösungen betreffen Beetpflüge.

Das Problem besteht hinsichtlich der Anordnung und Ausgestaltung des Gelenkes insbesondere darin, daß bei den Beetpflügen das Gelenk eine gewisse Höhe aufweisen muß, um zu verhindern, daß unter dem Gelenk Verstopfungen durch Strohknäule oder ähnliches vorkommen. Wenn jedoch das Gelenk zu hoch ist, ergibt sich für die an den Pflugkörpern angreifenden Kräfte bzw. deren Resultierende ein großer Hebelarm, welcher zum Anheben des hinteren Bereiches des Pfluges führt. Man hat deshalb versucht, durch Federn ein Gegenmoment aufzubringen, siehe DE-OS 22 48 186 und DE-Gbm 72 02 127. Bei der Lösung gemäß der EP-B1-297 969 sowie bei dem aus der EP-A1-318 391 bekannten Pflug ergibt sich jedoch in der normalen Lage des vorderen und hinteren Pflugrahmens kein ausreichendes Moment, so daß bei schweren Böden der hintere Pflugrahmen angehoben werden wird. Aus der EP-B1-297 969 ist es bekannt, das Gelenk zu verriegeln, wenn der Pflug im Vorgewende fährt. Während des Pflügens ist eine derartige Verriegelung jedoch nicht möglich, da dann die Wirkung des Gelenkes aufgehoben wurde. Bei dem aus der EP-A1-318 391 bekannten Pflug können die federnden Elemente nur dann wirksam werden, wenn der hintere Pflugrahmen bereits aus der fluchtenden, das heißt der normalen Lage heraus bewegt ist. Dies bedeutet, daß in der normalen Mittellage, in welcher eine Vorspannung aufgebracht werden müßte, Kraftfreiheit herrscht.

Der Erfindung liegt die Aufgabe zugrunde, einen Drehpflug der eingangs genannten Art zu schaffen, welcher bei einfachem Aufbau bau und einfacher, betriebssicherer Anwendbarkeit auch bei unebenem Boden eine konstante Tiefen-Führung des hinteren Pflugrahmens gewährleistet.

Diese Aufgabe wird erfindungsgemäß mit den Merkmalen des Anspruches 1 gelöst.

Der erfindungsgemäße Drehpflug zeichnet sich durch eine Reihe erheblicher Vorteile aus. Durch die erfindungsgemäß vorgesehene Anordnung des Gelenkes in der Symmetrieebene ergeben sich besonders günstige Kraftverhältnisse, weiterhin werden die aus dem Stand der Technik bekannten Nachteile vermieden, welche sich aus den im Stand der Technik ungünstigen Anordnungen der Gelenke ergeben. Durch die erfindungsgemäße Vorrichtung zum Aufbringen eines Momentes ist sichergestellt, daß der hintere Pflugrahmen stets in ausreichender Weise belastet ist, so daß die letzte Furche des Pfluges mit konstanter Tiefe ausgebildet werden kann.

In einer besonders günstigen Weiterbildung der Erfindung ist vorgesehen, daß die Vorrichtung zur Aufbringung eines Momentes zur Wirkung in beiden Drehrichtungen des Drehpfluges doppelt wirkend ausgebildet ist.

Weitere vorteilhafte Ausgestaltungen der Erfindung ergeben sich aus den Unteransprüchen.

Im folgenden werden Ausführungsbeispiele der Erfindung in Verbindung mit der Zeichnung beschrieben. Dabei zeigt:
- Fig. 1: eine schematische Draufsicht auf ein erstes Ausführungsbeispiel des erfindungsgemäßen Drehpfluges,
- Fig. 2: eine Seitenansicht des hinteren Pflugrahmens des in Fig. 1 dargestellten Drehpfluges,
- Fig. 3: eine schematische Teil-Seitenansicht eines ersten Ausführungsbeispieles des Gelenkbereiches,
- Fig. 4: eine vereinfachte Teil-Seitenansicht eines weiteren Ausführungsbeispieles des Gelenkbereiches,
- Fig. 5: eine Seitenansicht eines weiteren Ausführungsbeispieles des erfindungsgemäßen Gelenkbereiches,
- Fig. 8: eine rückseitige Teil-Schnittansicht eines weiteren Ausführungsbeispieles der Erfindung,
- Fig. 9: eine Teil-Seitenansicht eines weiteren Ausführungsbeispieles des erfindungsgemäßen Gelenkbereiches,
- Fig. 10: eine weitere vereinfachte Teilansicht eines Ausführungsbeispieles der Erfindung,
- Fig. 11: eine Seitenansicht des hinteren Pflugbereiches, in welcher ein weiteres Ausführungsbeispiel dargestellt ist,
- Fig. 12: eine Draufsicht des hinteren Pflugbereiches, ähnlich der Darstellung gemäß der Fig. 1, in welcher das Ausführungsbeispiel der Fig. 11 gezeigt ist,
- Fig. 13: eine Teil-Seitenansicht des in Fig. 11 und 12 gezeigten Ausführungsbeispiels, wobei die Abstützvorrichtung teilweise demontiert ist,
- Fig. 14: eine Teil-Seitenansicht, ähnlich Fig. 13, eines weiteren Ausführungsbeispiels, und
- Fig. 15: eine weitere Teil-Seitenansicht des Gelenkbereiches eines weiteren Ausführungsbeispiels.

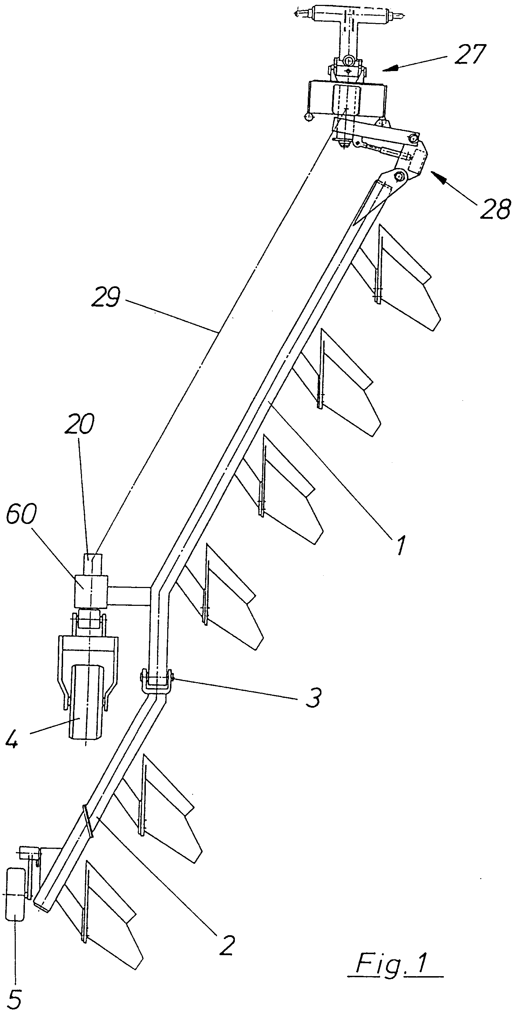

Die Fig. 1 zeigt in der Draufsicht in vereinfachter Weise die Ausgestaltung eines erfindungsgemäß weiterzubildenden Drehpfluges. Dieser umfaßt ein Vordergestell 27 sowie eine Schnittbreiteneinstellung 28, an welchen ein vorderer Pflugrahmen 1 sowie Stabilisator 29 gelagert sind. Die Abstützung des vorderen Pflugrahmens erfolgt über ein Hinterrad 4. Insofern entspricht der Aufbau dieses Drehpfluges den bisher bekannten Ausgestaltungsformen, so daß auf weitere Erläuterungen verzichtet und auf den diesbezüglichen Stand der Technik verwiesen werden kann.

Am hinteren Ende des vorderen Pflugrahmens 1 ist an einem horizontalen Gelenk 3 ein hinterer Pflugrahmen 2 gelagert, dessen freies Ende mit einem Tiefen-Führungsrad 5 versehen ist.

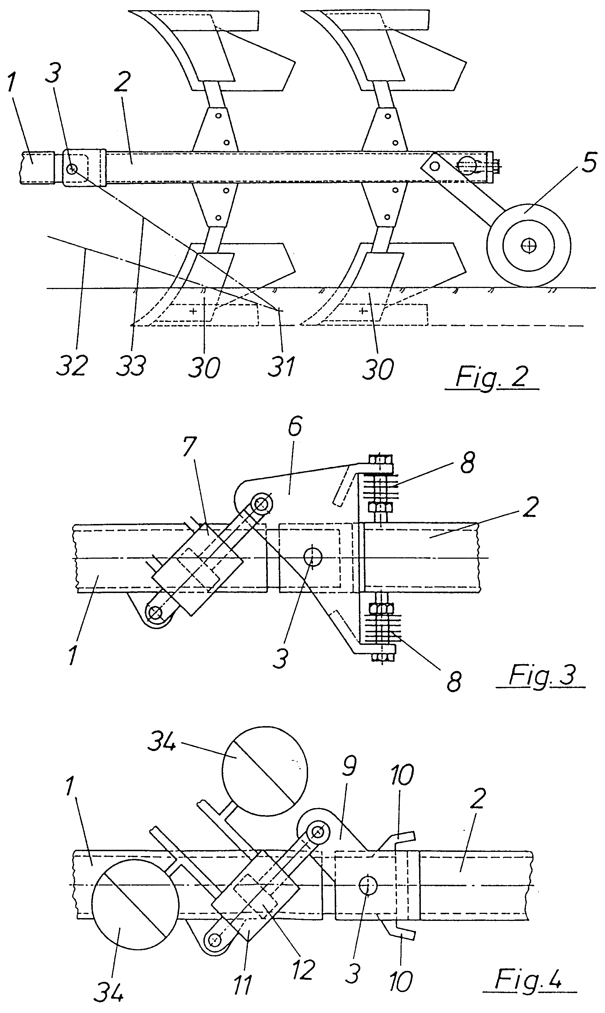

Die Fig. 2 zeigt den hinteren Pflugrahmen 2 in Seitenansicht. Dabei ist insbesondere die Lage des horizontalen Gelenkes 3 erläutert. Die Kräfte der Pflugkörper 30 führen zu einem Eingriff der Kraft-Resultierenden an dem Punkt 31, wobei die Resultierende der Bodenkräfte die mit 32 gezeigte Orientierung haben kann. Es ist ersichtlich, daß sich, wie beim Stand der Technik, ein erheblicher Hebelarm ergibt. Nur wenn die Resultierende die mit 33 eingezeichnete Richtung aufweist, ist sichergestellt, daß der hintere Teil des Pfluges in ausreichender Weise im Boden gehalten werden kann.

Aus der Darstellung der Fig. 2 ergibt sich, daß erfindungsgemäß mehrere Lösungswege zur Verfügung stehen. Zum einen ist es möglich, das erforderliche Moment mit Hilfe einer äußeren Kraft, zum Beispiel mittels eines Hydraulikzylinders in Kombination mit elastischen Federelementen aufzubringen. Eine andere Möglichkeit besteht darin, das Moment mit Hilfe, der Drehung des Pfluges aufzubringen.

In Fig. 3 ist ein erstes Ausführungsbeispiel gezeigt, bei welchem schwenkbar an dem horizontalen Gelenk 3 ein Zwischenelement 6 gelagert ist, dessen rückwertiger Bereich gabelförmig ausgebildet ist und den hinteren Pflugrahmen 2 umgreift. An den gabelförmigen Enden ist jeweils ein elastisches Element 8 gelagert, welches jeweils ein Teller-Federpaket umfaßt, sowie eine einstellbare Schraube. Mit Hilfe der einstellbaren Schraube sind die Endlagen und die möglichen Federwege bzw. die Vorspannung vorgebbar. An dem vorderen Ende des Zwischenelementes 6 ist eine längenveränderbare Strebe 7 angeordnet, welche in Form eines doppelt wirkenden Hydraulikzylinders ausgestaltet ist. Mit Hilfe der Strebe 7 läßt sich die Lage des Zwischenelementes 6 einstellen. Die Fig. 3 zeigt die Mittellage der Einstellung des Zwischenelementes 6. Zur Arbeit wird der Hydraulikzylinder etwas ausgefahren, wobei der hintere Pflugrahmen 2 nicht nach unten verschwenkt wird, weil sich das Tiefen-Führungsrad 5 am Erdboden abstützt. Es wird dabei lediglich das obere Federpaket 8 gespannt. Wenn während des Betriebes der obere gabelförmige Bereich des Zwischenelementes 6 nach unten drückt, bildet sich unter dem Schraubenkopf des oberen elastischen Elementes 8 etwas Luft, ebenso wie zwischen dem oberen Ende des unteren Bolzens und dem hinteren Pflugrahmen 2. Der Pflugrahmen 2 kann infolgedessen in einem vorgegebenen Schwenkwinkel nach oben oder nach unten gefedert ausweichen. Der Hydraulikzylinder 7 ist deswegen doppelt arbeitend ausgebildet, um beim Schwenken des Pfluges eine entsprechende Bewegung des Zwischenelementes 6 zu ermöglichen. In einer alternativen Weiterbildung könnte anstatt der elastischen Federpakete 8 auch ein Gasdruckspeicher an dem Zylinder 7 angeschlossen werden.

In Fig. 4 ist eine alternative Ausgestaltungsform gezeigt, bei welcher an dem hinteren Pflugrahmen 2 ein Zwischenelement 9 gelagert ist, welches rückseitig gabelförmig ausgebildet ist und zwei Anschläge 10 aufweist, welche sich in den Endlagen gegen den hinteren Pflugrahmen 2 abstützen. Das vordere Ende ist, ähnlich wie bei dem in Fig. 3 gezeigten Ausführungsbeispiel, mit einem doppelt wirkenden Zylinder, welcher eine Strebe 11 bildet, verbunden. Der Kolben 12 des Zylinders begrenzt zwei Arbeitskammern, welche jeweils mit einem Gasspeicher 34 verbunden sind. Es ist somit möglich, durch Beaufschlagung mit Hydraulikfluid den Kolben 12 zu verfahren. In seiner jeweiligen Stellung ist, bedingt durch die Gasspeicher 34, eine federnde Bewegung des Kolbens 12 in dem Zylinder möglich. Die Gasspeicher 34 können an beliebiger Stelle im Vordergestell des Pfluges angebracht sein. Die Anschläge 10 begrenzen den mögliche Winkel der Verschwenkung des hinteren Pflugrahmens und gestatten beispielsweise einen Schwenkwinkel von 8°, welcher bei Überfahrung von Bodenunebenheiten überschritten werden kann.

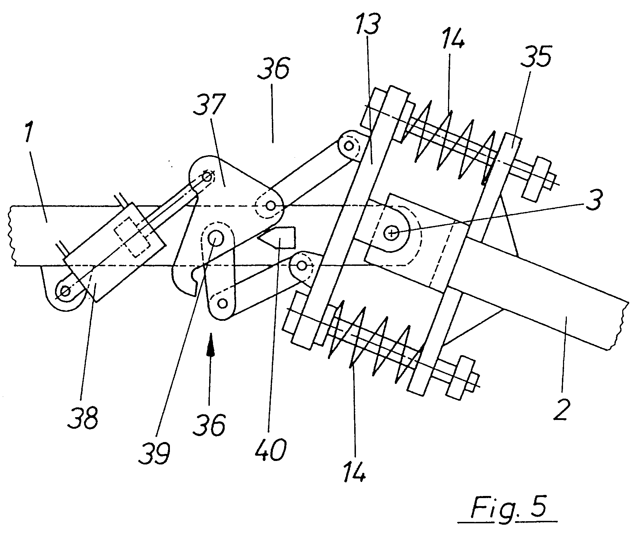

Die Fig. 5 zeigt eine weitere Ausgestaltung der Erfindung, bei welcher die Abstützung, ähnlich dem in Fig. 3 gezeigten Ausführungsbeispiel über elastische Elemente 14 (Federpakete) erfolgt. Hierzu ist an dem horizontalen Gelenk 3 ein plattenförmiges Zwischenelement 13 gelagert, welches mit einer Lagerplatte 35 des hinteren Pflugrahmens 2 zusammenwirkt. An der vorderen Seite des Zwischenelementes 13 sind zwei Kniehebelmechanismen 36 angeordnet, welche über ein Schaltelement 37, welches bei 39 gelagert ist, betätigbar sind. Ein Anschlag 40 dient zur Begrenzung des jeweiligen Schwenkweges des Schaltelementes 37. Dieses wird durch einen Zylinder 38 betätigt. Der Zylinder 38 dient somit nicht zur Aufbringung der Vorspannkraft, sondern lediglich zum Einrücken des Kniehebelmechanismus 36, welcher zu der gewünschten Federbelastung führt. Im übrigen kann der Kniehebelmechanismus auch bei dem Ausgestaltungsbeispiel der Fig. 3 Verwendung finden.

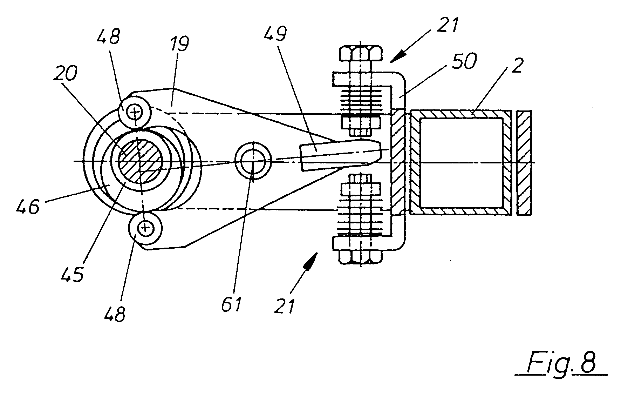

Das in Fig. 8 gezeigte Ausführungsbeispiel nutzt die Drehung des Pfluges. Mit 20 ist die vertikale Achse des Rades 4 bezeichnet. Bei einer Drehung des Pflugendes von einer Seite auf die andere Seite erfolgt die Verschwenkung um die in Fahrtrichtung angeordnete Achse 20, sowie dies aus dem Stand der Technik bekannt ist. Die Lagerung der Achse 20 stützt sich vorne und hinten an einem Bund oder einer aufgesetzten Hülse ab. Mit 45 ist eine derartige Hülse bezeichnet. An der Hülse 45 ist ein Exzenter 46 angeordnet, mit welchem bei der Drehung des Pfluges um die Lagerstelle 61 ein an der Lagerstelle 61 gelagertes Schwenkstück 19 verschwenkt wird. Das Schwenkstück 19 weist Rollen 48 auf, welche auf dem Exzenter 46 abrollen. An dem freien Ende des Schwenkstückes 19 ist eine Nase 49 ausgebildet, welche im Innenraum eines u-förmigen Trägers 50 aufgenommen ist, an dessen Schenkeln jeweils federvorgespannte Anschläge 21 ausgebildet sind. Diese sind ähnlich dem Ausführungsbeispiel der Fig. 3 ausgestaltet und umfassen jeweils eine mit einer Mutter einstellbare Schraube, auf welche ein Federpaket (Tellerfedern) aufgefädelt ist. Die Nase 49 drückt in vollständig gedrehter Stellung des Schwenkstückes 19 nach oben auf das Ende des Bolzens des oberen Anschlages 21 und übt somit einen Druck nach oben auf das Ende des Trägers 50 aus. Es wird somit ein Moment um das Gelenk 3 erzeugt, wodurch das Tiefen-Führungsrad 5 bzw. der hintere Pflugrahmen 2 gegen den Erdboden gedrückt werden.

Ergänzend ist auszuführen, daß bei dem Ausführungsbeispiel der Fig. 3 und 4 vermieden wird, daß der hintere Pflugrahmen 2 nach dem Durchgang durch den Totpunkt schlägt. Bei der Arbeit wird der hintere Pflugrahmen 2 nach unten gedrückt. Zu Beginn des Drehens wird der Drehzylinder in Gegenrichtung beaufschlagt, dieses führt auch zu einer Beaufschlagung des Zylinders 7 bzw. 11. Anschließend wird der Rahmen 2 nach oben geschwenkt, wenn er die Totlage durchwandert, hat der Rahmen 2 somit bereits die Schwenkung durchgeführt, welche er bei einem Schlagen machen würde. Letzteres kann somit nicht mehr auftreten.

Auch das Ausführungsbeispiel der Fig. 8 verhindert ein ungewolltes Schlagen, da die Federpakete der Anschläge 21 stets vorgespannt sind und mögliche Bewegungen des Rahmens hinter der Totlage gefedert abfangen.

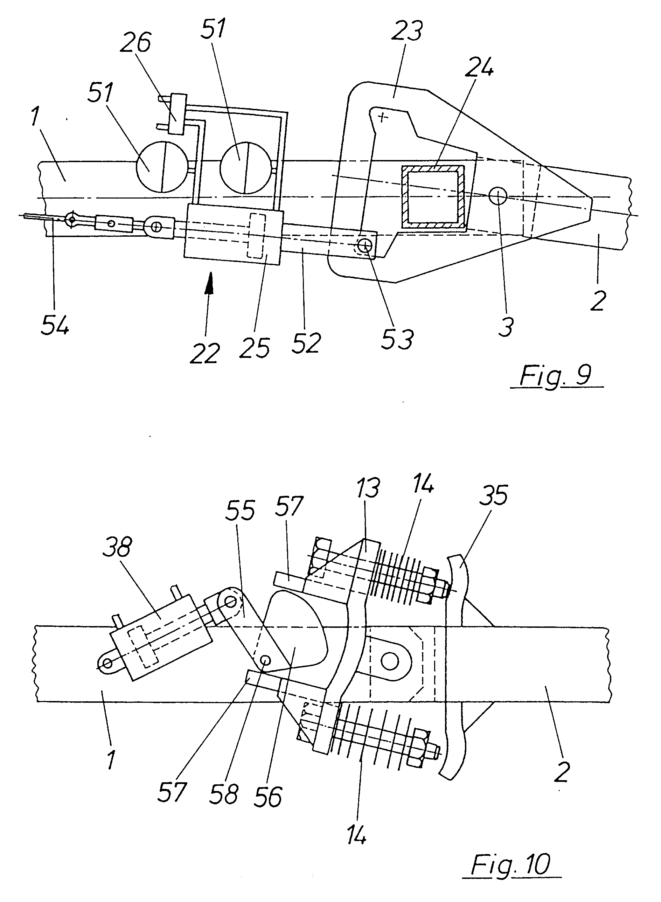

Die Fig. 9 zeigt eine weiteres Ausführungsbeispiel, bei welchem an dem horizontalen Gelenk 3 ein Kulissenelement 23 gelagert ist, welches fest mit dem hinteren Pflugrahmen 2 verbunden ist. Im Innenraum des Kulissenelementes 23 bildet der Tragarm einen Anschlag 24. Weiterhin weist dieses Ausführungsbeispiel ein Einstellelement 22 (Zugglied) auf, welches in Form eines doppelt wirkenden Hydraulikzylinders ausgebildet ist, welcher zusätzlich, ähnlich dem in Fig. 4 gezeigten Ausführungsbeispiel mit Gasspeichern 51 versehen ist. Das Einstellelement 22 greift über eine gabelförmige Strebe 52 und einen Bolzen 53 in das Kulissenelement 23 ein. Die Darstellung der Fig. 9 zeigt den hinteren Rahmen 2 in leicht abgewinkeltem Zustand, einem Zustand, welcher auftritt, wenn der Pflug ausgehoben ist und das Zugglied 22 von der einen Seite zur anderen Seite zu wechseln hat. Das Kulissenelement 23 ist so geformt, daß der Bolzen 53 bei Zugkräften bei beliebiger Stellung der Kulisse, beispielsweise bei einem Schwenkwinkel von 8° plus minus zur Rahmenmittelebene, nicht abgleiten kann. Bei der Arbeit ist die Kolbenstange des Hydraulikzylinders 25 eingefahren, so daß ein aus dem Zylinder austretendes Seil 54 gestrafft ist. Durch Aufstützen des hinteren Pflugrahmens 2 auf das Tiefen-Führungsrad 5 fluchten die Pflugrahmen 1 und 2 miteinander, so daß Spannung an dem Einstellelement 22 besteht. Bei einem Ausheben würde der hintere Pflugrahmen 2 zunächst in die gezeigte, leicht abgeknickte Stellung gelangen. Das Abknicken wird durch die Form der Kulisse und des Anschlages 24 begrenzt. Wenn der Pflug beim Drehen durch die Totlage geht, behält der hintere Pflugrahmen 2 seine Stellung relativ zu dem vorderen Pflugrahmen 1, weil er durch das Einstellelement 22 (Zugglied) gehalten ist. Nach dem Drehen wird der Hydraulikzylinder 25 betätigt, so daß die Kolbenstange ausfährt und der Bolzen 53 und die Strebe 52 nach unten gleiten können, um in die nächste Arbeitsstellung zu gelangen. Nachfolgend wird der Zylinder 25 wieder eingefahren. Die in den Zuleitungen des Zylinders vorgesehenen Druckspeicher ermöglichen eine elastische Arbeit des Zylinders 25 beim Pflügen. Um Leckverluste zu kompensieren, ist in den Zuleitungen zu dem Hydraulikzylinder 25 ein Sperrblock 26 eingefügt.

Das Ausführungsbeispiel gemäß Fig. 10 ist ähnlich dem Ausführungsbeispiel der Fig. 5 ausgebildet, wobei gleiche Teile mit gleichen Bezugsziffern versehen sind. An dem Zylinder 38 ist ein Zwischenhebel 55 gelagert, welcher mit einem Kulissenteil 56 verbunden ist, welches gegen Anschläge 57 des plattenförmigen Zwischenelementes 13 anlegbar ist, um eine Vorspannkraft auf die Lagerplatte 35 aufzubringen. Das Bezugszeichen 58 zeigt die Lagerstelle des Kulissenteils 56 und des mit diesem verbundenen Zwischenhebels 55.

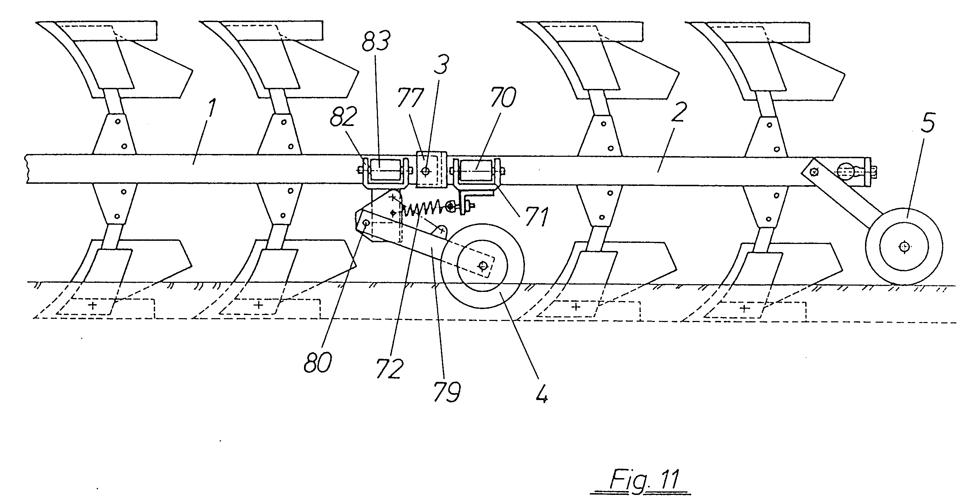

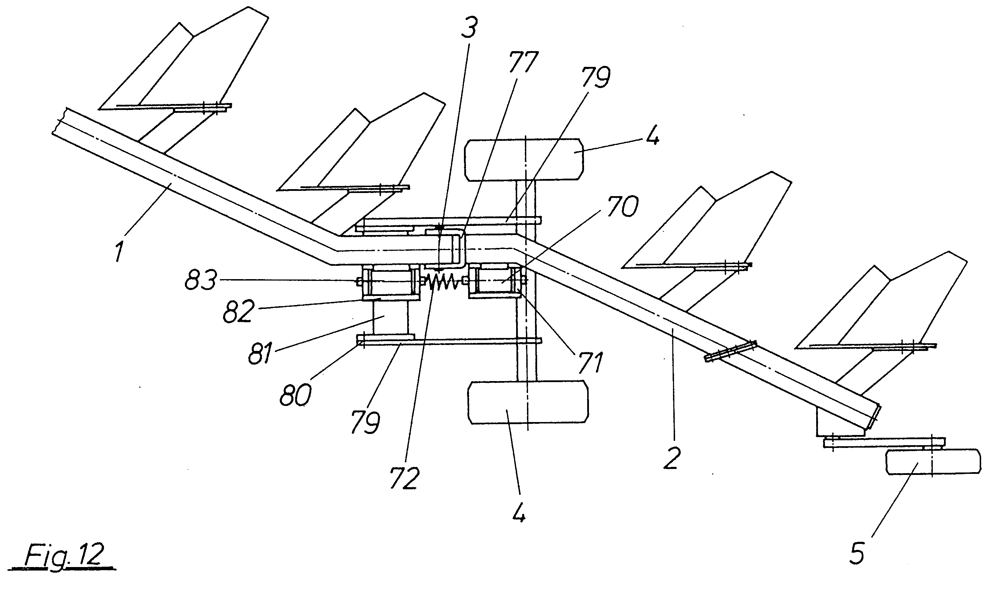

Die Fig. 11 und 12 zeigen den hinteren Teil eines Aufsattel-Drehpfluges in der Seitenansicht bzw. in der Draufsicht. Gleiche Teile wurden, bezüglich des vorangegangenen Ausführungsbeispiels mit gleichen Bezugszeichen versehen. Die Fig. 11 und 12 zeigen die horizontale, quer zur Fahrtrichtung angeordnete Achse 3, um welche der hintere Pflugrahmen relativ zu dem vorderen Pflugrahmen verschwenkbar ist. Weiterhin ist die Abstützvorrichtung dargestellt, welche einen zweirädrigen Karren mit Rädern 4 umfaßt, welche an Armen 79 gelagert sind, welche wiederum schwenkbar an einem Gelenk 80 gelagert sind, welches an einem Querträger 81 ausgebildet ist. Der Querträger 81 ist wiederum mit einem u-förmigen Bügel 82, welcher um eine horizontale, im wesentlichen in Fahrtrichtung liegende Achse 83 verschwenkbar am hinteren Endbereich des vorderen Pflugrahmens 1 gelagert ist. Wie sich aus den Fig. 11 und 12 ergibt, kann der Drehpflug um die horizontale Achse 83 gedreht werden, so wie dies auch aus dem Stand der Technik bekannt ist.

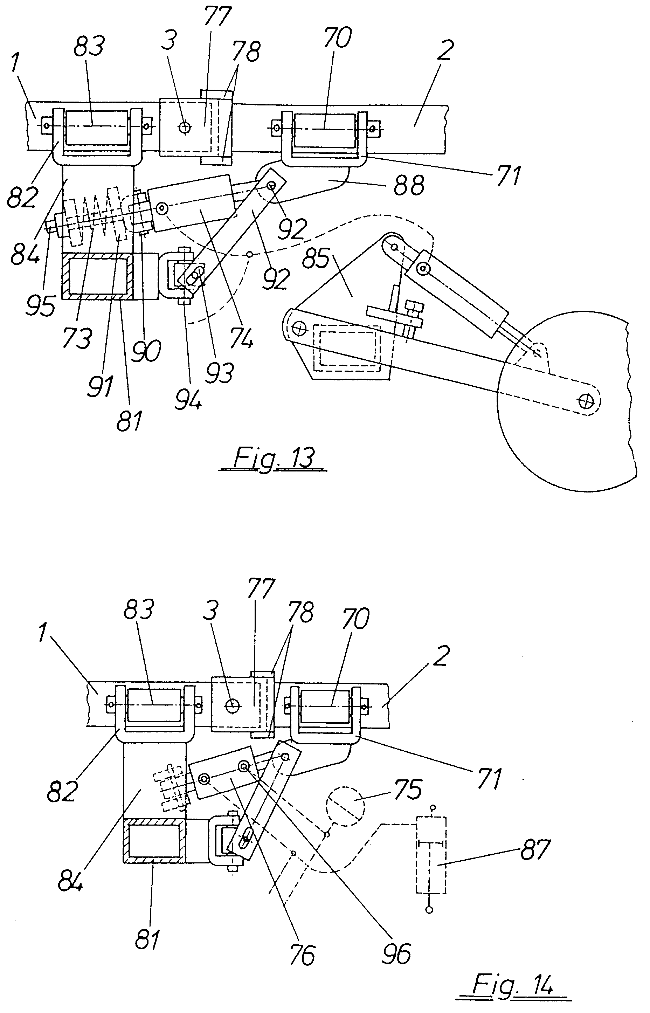

Am Anlenkbereich der Abstützvorrichtung wirkt, wie in den Fig. 11 und 12 schematisch gezeigt, ein vorzugsweise einstellbares, elastisches Spannelement 72, welches an einem u-förmigen Bügel 71 gelagert ist, welcher um eine horizontale, zu der Achse 83 fluchtende Achse 70 drehbar an dem vorderen Endbereich des hinteren Rahmens 2 gelagert ist. Die Ausgestaltung weiterer Ausführungsbeispiele des elastischen Spannelementes 72 wird anhand der Fig. 13 und 14 nachfolgend beschrieben. Das elastische Spannelement 72 dient dazu, ein Moment um das Gelenk 3 auszuüben, um den hinteren Rahmen 2 soweit zu belasten, daß dieser nicht durch die Widerstandskräfte um das Gelenk 3 hochgeschwenkt wird.

Die Fig. 13 zeigt ein Ausführungsbeispiel des elastischen Spannelementes, wobei zur Vereinfachung der Darstellung die Anordnung und Lagerung des Rades 4 separat dargestellt ist.

Das Gelenk 3 weist, wie auch aus Fig. 12 ersichtlich, einen u-förmigen Bügel 77 auf, welcher das hintere Ende des vorderen Pflugrahmens 1 umgreift und um die Achse 3 schwenkbar ist. An der Oberseite und der Unterseite des u-förmigen Bügels 77 ist jeweils ein Anschlag 78 angebracht, welcher den maximal möglichen Schwenkwinkel begrenzt, so wie dies in Fig. 13 gezeigt ist.

Bei dem Ausführungsbeispiel der Fig. 13 sind an dem Bügel 82 zwei plattenförmige Stützen 84 befestigt, an deren unterem Ende der Querträger 81 angebracht ist.

Aus dem rechten Bildteil der Fig. 13 ergibt sich, daß die Lagerung der Arme 79 des zweirädrigen Karrens über Platten 85 erfolgt, welche an den Enden des Querträgers 81 angeschweißt sind. Die Platten 85 tragen einen einstellbaren Anschlag 86 zur Begrenzung der Verschwenkbarkeit des Armes 79. Weiterhin ist zwischen der Platte 85 und dem radseitigen Ende des Arms 79 ein Aushubzylinder 87 zwischengeschaltet.

An dem Bügel 71 ist eine Platte 88 angeschweißt, welche ein Gelenk 89 aufweist, an welchem ein Hydraulikzylinder 74 gelagert ist. Das andere Ende des Hydraulikzylinders 74 trägt über ein vertikales Gelenk 90 ein Federpaket 73. Dieses stützt sich gegen eine Brücke 91, so daß bei einer Verschwenkung des Pflugrahmens 2 nach oben das Federpaket 73 komprimiert wird.

Bei dem gezeigten Ausführungsbeispiel ist weiterhin der bereits beschriebene Hydraulikzylinder 74 vorgesehen, welcher mit dem oder den Aushubzylindern 87 gekoppelt sein kann, siehe die gestrichelten Linien in Fig. 13. Der Zylinder 74 dient dazu, den Rahmen 2 beim Transport abzustützen und die notwendige Bodenfreiheit zu gewährleisten. Da der Rahmen 2 um das Gelenk 3 begrenzt schwenkbar ist und da eine angewinkelte Stellung beim Drehen des Drehpfluges vorliegen kann, muß der Zylinder 74 an dem Gelenk 89 mittels eines Kugelgelenks angelenkt werden. Um den Bügel 71 beim Drehen des Pfluges in seiner nach unten gerichteten Stellung zu halten, ist es günstig, zumindest eine zusätzliche Lasche 92 an dem Gelenk 89 anzulenken, welche an ihrem unteren Ende ein Langloch 93 aufweist, welches über ein vertikales Gelenk 94 eine Lagerung der Lasche 92 an dem Querträger 81 bewirkt. Das Gelenk 94 liegt senkrecht unter dem Gelenk 3.

Es ist darauf hinzuweisen, daß der Hydraulikzylinder 74 eine weitere Ausgestaltungsvariante betrifft, jedoch nicht notwendigerweise vorgesehen sein muß, da er lediglich zum Anheben des hinteren Pflugrahmens 2 dient. Alternativ hierzu könnte ein das Federpaket 73 durchdringender Bolzen 95 auch bis zu dem Gelenk 89 verlängert sein.

Die Fig. 14 zeigt ein alternatives Ausführungsbeispiel, bei welchem die Belastung des hinteren Pflugrahmens 2 durch einen Hydraulikzylinder 76 erfolgt, welcher mit einem Gasdruckspeicher 75 betriebsverbunden ist. In gestrichelter Linie ist weiterhin die Verbindung zu den Aushubzylindern 87 gezeigt. Der Zylinder 76 ist als doppelt wirkender Zylinder ausgestaltet. Auch bei diesem Ausführungsbeispiel kann der hintere Rahmen 2 beim Transport mit Hilfe des Hydraulikzylinders angehoben werden. Bei der Arbeit wird der Gasdruckspeicher 75 belastet. Wenn der Pflugrahmen 2 beim Durchfahren einer Senke etwas aufwärts schwenken muß, wird Hydraulikflüssigkeit durch den Auslaß 96 in den Gasdruckspeicher 75 geleitet.

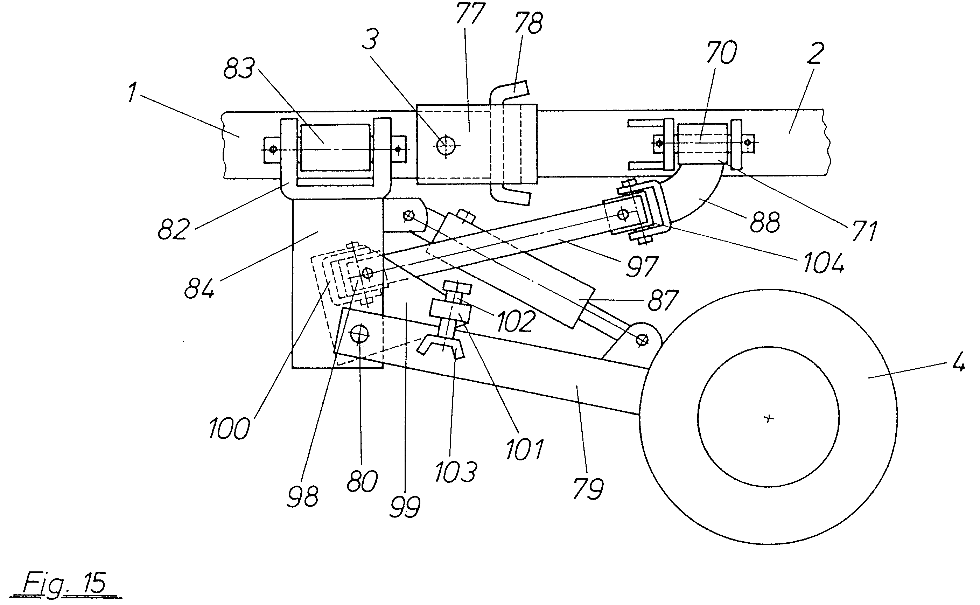

Die Fig. 15 zeigt ein weiteres Ausführungsbeispiel, bei welchem, wie bei den Ausführungsbeispielen der Fig. 11 bis 14, die den hinteren Pflugrahmen 2 vorspannende Mittel im Bereich des Karrens angeordnet sind. Auch bei dem in Fig. 15 gezeigten Ausführungsbeispiel sind diese Mittel unterhalb des Pflugrahmens gelegen.

Zunächst unterscheidet sich das Ausführungsbeispiel darin, daß die beiden Anschläge 40 zur Begrenzung der Verschwenkbarkeit des hinteren Pflugrahmens am hinteren Ende des vorderen Pflugrahmens 1 angebracht sind.

Im übrigen sind gleiche Teile wie bei den vorangegangenen Ausführungsbeispielen wiederum mit gleichen Bezugsziffern versehen, so daß auf eine nochmalige Beschreibung verzichtet werden kann.

Zu beiden Seiten des Aushubzylinders 87 sind Laschen 97 vorgesehen, welche dazu dienen, den Rahmen 2 nach unten zu ziehen. Am vorderen Ende der Lasche 97 ist ein Kreusgelenk 98 angeordnet, welches einen Angriffspunkt an einem Winkelhebel 99 bildet, welcher an dem Lager 80 gelagert ist. Der Winkelhebel 99 ist durch zwei Platten gebildet, welche durch einen u-förmigen Bügel 100 miteinander verbunden sind. Dieser befindet sich zwischen den beiden vertikalen Stützen 84. Von dem Winkelhebel 99 aus erstrecken sich Konsolen 101, in denen sich Stellschrauben 102 zur Einstellung der Arbeitstiefe befinden. Die Stellschraube oder die mehreren Stellschrauben 102 stützen sich an Konsolen 103 ab, welche an dem jeweiligen Arm 79 befestigt sind.

Die Laschen 97 sind an ihrem rückwärtigen Ende ebenfalls über ein Kreuzgelenk 104 gelagert, damit der Rahmen 2 zwischen den Anschlägen 78 schwenkbar ist.

Die in den Laschen 97 wirkende Kraft wird durch die Belastung des Karrens aufgebracht, und zwar durch die Abstützung in den Rädern 4 des Karrens, welche um das Gelenk 80 wirkt und das Kreuzgelenk 98 nach vorne zieht. Wenn das Stützrad 5 am hinteren Ende des hinteren Rahmens 2 in eine Senke läuft, gibt die in der Lasche 97 wirkende Kraft nach, so daß das Ende des hinteren Rahmens 2 der Bodenkontur folgt. Eine analoge Bewegung läuft ab, wenn das Stützrad 5 über eine Bodenerhebung läuft.

Bei den zuletzt beschriebenen Ausführungsbeispielen wirkt es sich insbesondere als günstig aus, daß die Teilung des Pfluges in die beiden Pflugrahmen 1 und 2 nicht allein auf die Bodenanpassung wirkt, sondern vor allem auch ein besseres Beginnen der neuen Furchen und ein besseres Beenden von gepflügten Furchen bewirkt.

Die Erfindung ist nicht auf die gezeigten Ausführungsbeispiele beschränkt, vielmehr ergeben sich für den Fachmann im Rahmen der Erfindung vielfältige Abwandlungs- und Modifikationsmöglichkeiten.

## Patentansprüche

1. Aufsattel- oder Anhänge-Drehpflug mit einem vorderen (1) und einem hinteren (2), durch ein horizontales in der Symmetrieebene des Pflugrahmens (1, 2) angeordnetes Gelenk (3) verbundenen Pflugrahmen, mit einer mindestens ein Rad (4) umfassenden Abstützvorrichtung, welche in der hinteren Hälfte des Drehpfluges angeordnet ist, und einer Tiefen-Führungseinrichtung für den hinteren Pflugrahmen (2), dadurch gekennzeichnet, daß im Bereich des Gelenkes (3) eine Vorrichtung vorgesehen ist, über die während des Pflügens zur Belastung des hinteren Pflugrahmens (2) ein über dessen Schwenkbereich ständiges, zum Boden wirkendes Moment aufbringbar ist.

2. Drehpflug nach Anspruch 1, dadurch gekennzeichnet, daß die Vorrichtung zur Aufbringung eines Momentes doppelt für beide Arbeitslagen wirkend ausgebildet ist.

3. Drehpflug nach Anspruch 1 oder 2, dadurch gekennzeichnet, daß die Vorrichtung zur Aufbringung eines Momentes ein an dem Gelenk (3) drehbar gelagertes Zwischenelement (6) umfaßt, welches über eine längenveränderbare Strebe (7) an dem vorderen Pflugrahmen (1) gelagert ist, an seinem hinteren Bereich gabelförmig ausgebildet ist und den hinteren Pflugrahmen (2) unter Zwischenschaltung jeweils zumindest eines elastischen Elementes (8) umgreift. (Fig. 3).

4. Drehpflug nach Anspruch 3, dadurch gekennzeichnet, daß die Strebe (7) in Form eines Hydraulikzylinders ausgebildet ist, der mit mindestens einem Gasspeicher (34) verbunden ist.

5. Drehpflug nach einem der Ansprüche 3 oder 4, gekennzeichnet durch Endanschläge zur Begrenzung des Schwenkwinkels des hinteren Pflugrahmens (2).

6. Drehpflug nach Anspruch 1 oder 2, dadurch gekennzeichnet, daß die Vorrichtung zur Aufbringung eines Momentes ein an dem Gelenk (3) drehbar gelagertes Zwischenelement (9) umfaßt, dessen hinteres Ende unter Ausbildung seitlicher Anschläge (10) gabelförmig ausgebildet ist, und dessen vorderes Ende über eine längeneinstellbare, elastisch längenveränderbare Strebe (11) an dem vorderen Pflugrahmen (1) abgestützt ist. (Fig. 4).

7. Drehpflug nach Anspruch 6, dadurch gekennzeichnet, daß die Strebe (11) in Form eines Hydraulikzylinders mit beidseitiger Gasvorspannung des Kolbens (12) ausgebildet ist.

8. Drehpflug nach Anspruch 1 oder 2, dadurch gekennzeichnet, daß die Vorrichtung zur Aufbringung eines Momentes ein an dem Gelenk (3) drehbar gelagertes Zwischenelement (13) umfaßt, welches eine Platte aufweist, an welcher beabstandet elastische, gegen den hinteren Pflugrahmen (2) anlegbare Elemente (14) gelagert sind und welche wahlweise in eine von zwei Vorspannpositionen bringbar ist. (Fig. 5).

9. Drehpflug nach Anspruch 1 oder 2, dadurch gekennzeichnet, daß die Vorrichtung zur Aufbringung eines Momentes ein Schwenkstück (19) umfaßt, welches über einen Exzenter an der horizontalen Achse (20) des Hinterrades (4) gelagert ist und gegen federbelastete Anschläge (21) des hinteren Pflugrahmens (2) anlegbar ist. (Fig. 8).

10. Drehpflug nach Anspruch 1 oder 2, dadurch gekennzeichnet, daß die Vorrichtung zur Aufbringung eines Momentes ein an dem hinteren Pflugrahmen (2) befestigtes, nach vorne vorstehendes, gabelförmiges Kulissenelement (23) umfaßt, welches einen Anschlag (24) des vorderen Pflugrahmens (1) umgreift und in welchem ein einstellbares, elastisch verformbares Einstellelement (22) gelagert ist. (Fig. 9).

11. Drehpflug nach Anspruch 10, dadurch gekennzeichnet, daß das Einstellelement (22) in Form eines doppelt wirkenden, gasvorgespannten Hydraulikkolbens (25) ausgebildet ist.

12. Drehpflug nach Anspruch 11, dadurch gekennzeichnet, daß der Hydraulikkolben (25) mit einem Sperrblock (26) versehen ist.

13. Drehpflug nach Anspruch 1, dadurch gekennzeichnet, daß die Vorrichtung zur Aufbringung des Moments am vorderen Ende des hinteren Pflugrahmens (2) ein horizontales in Fahrtrichtung oder schräg zur Fahrtrichtung angeordnetes Gelenk (70, 71) umfaßt, das über ein elastisches Spannelement (72) mit der Abstützvorrichtung verbunden ist.

14. Drehpflug nach Anspruch 13, dadurch gekennzeichnet, daß das Spannelement ein Federpaket (73) umfaßt.

15. Drehpflug nach Anspruch 14, dadurch gekennzeichnet, daß in dem Spannelement ein Hydraulikzylinder (74) zum Anheben des hinteren Rahmens (2) beim Ausheben des Drehpflugs zwischengeschaltet ist.

16. Drehpflug nach Anspruch 13, dadurch gekennzeichnet, daß das Spannelement einen mit einem Gasdruckspeicher (75) verbundenen Hydraulikzylinder (76) umfaßt.

17. Drehpflug nach Anspruch 1, dadurch gekennzeichnet, daß das Gelenk (3) einen das hintere Ende des vorderen Rahmens (1) u-förmig umgreifenden Bügel (77) umfaßt, welcher zur Begrenzung der Schwenkbewegung mit Anschlägen (78) versehen ist.

18. Drehpflug nach Anspruch 1, dadurch gekennzeichnet, daß die Vorrichtung zur Aufbringung eines Momentes am vorderen Ende des hinteren Pflugrahmens 2 ein horizontales in Fahrtrichtung oder schräg zur Fahrtrichtung angeordnetes Gelenk umfaßt, das über ein Verbindungselement (97) mit der Abstützvorrichtung verbunden ist.

19. Drehpflug nach Anspruch 18, dadurch gekennzeichnet, daß das starre Verbindungselement (97) über ein Kreuzgelenk (104) an einem Bügel (71) des Gelenks und über ein Kreuzgelenk (98) an einem Winkelhebel (99) gelagert ist, welcher um eine horizontale Achse (80) schwenkbar an einer Stütze (84) gelagert ist, welche um eine horizontale Achse (83), welche mit einer Achse (70) des Gelenks im wesentlichen fluchtet, an dem vorderen Pflugrahmen (1) drehbar gelagert ist.

## Claims

1. A semi-mounted or trailed reversible plough having a front (1) and a rear (2) plough frame connected by a horizontal joint (3) arranged in the plane of symmetry of the plough frame (1, 2), having a supporting device comprising at least one wheel (4) and arranged in the rear half of the reversible plough, and having a depth guide arrangement for the rear plough frame (2), characterised in that, in the region of the joint (3), a device is provided for applying a moment for loading the rear plough frame (2) during ploughing, the said moment being constant over the pivoting range of the rear plough frame (2) and acting towards the ground.

2. A reversible plough according to claim 1, characterised in that the device for applying a moment is double-acting for both operating positions.

3. A reversible plough according to claim 1 or 2, characterised in that the device for applying a moment comprises an intermediate member (6) rotatably mounted on the joint (3) and mounted on the front plough frame (1) via a length-adjustable strut (7), the intermediate member (6) being formed in the manner of a fork in its rear region and engaging the rear plough frame (2) with the interposition of at least one resilient member (8). (Fig. 3)

4. A reversible plough according to claim 3, characterised in that the strut (7) is in the form of an hydraulic cylinder connected to at least one gas store (34).

5. A reversible plough according to either one of claims 3 and 4, characterised by end stops for limiting the pivoting angle of the rear plough frame (2).

6. A reversible plough according to claim 1 or 2, characterised in that the device for applying a moment comprises an intermediate member (9) rotatably mounted on the joint (3), its rear end being fork-shaped and forming lateral stops (10) and its front end being supported on the front plough frame (1) via a resiliently length-adjustable strut (11). (Fig. 4)

7. A reversible plough according to claim 6, characterised in that the strut (11) is in the form of an hydraulic cylinder having a piston (12), both ends of which are acted upon under gas pressure.

8. A reversible plough according to claim 1 or 2, characterised in that the device for applying a moment comprises an intermediate member (13) rotatably mounted on the joint (3) and having a plate, resilient members (14), supportable against the rear plough frame (1) [sic - 2], being mounted, spaced apart, on the said plate which is optionally movable into one of two loading positions. (Fig. 5)

9. A reversible plough according to claim 1 or 2, characterised in that the device for applying a moment comprises a pivoting member (19) mounted on the horizontal axis (20) of the rear wheel (4) via an eccentric and supportable against spring-loaded stops (21) on the rear plough frame (2). (Fig. 8)

10. A reversible plough according to claim 1 or 2, characterised in that the device for applying a moment comprises a fork-shaped link member (23) projecting forwards and fixed to the rear plough frame (2), a stop (24) on the front plough frame (1) being engaged by the link member (23), in which an adjustable, resiliently deformable adjustment member (22) is mounted. (Fig. 9)

11. A reversible plough according to claim 10, characterised in that the adjustment member (22) is in the form of a double-acting hydraulic piston (25) acted upon under gas pressure.

12. A reversible plough according to claim 11, characterised in that the hydraulic piston (25) is provided with a barrier block (26).

13. A reversible plough according to claim 1, characterised in that the device for applying the moment comprises, at the front end of the rear plough frame (2), a horizontal joint (70, 71) arranged in the direction of travel or at an angle to the direction of travel and connected to the supporting device via a resilient loading member (72).

14. A reversible plough according to claim 13, characterised in that the loading member comprises a spring assembly (73).

15. A reversible plough according to claim 14, characterised in that an hydraulic cylinder (74) for lifting the rear frame (2) when withdrawing the reversible plough is interposed in the loading member.

16. A reversible plough according to claim 13, characterised in that the loading member comprises an hydraulic cylinder (76) connected to a gas pressure store (75).

17. A reversible plough according to claim 1, characterised in that the joint (3) comprises a U-shaped stirrup (77) engaging the rear end of the front frame (1) and provided with stops (78) for limiting the pivoting movement.

18. A reversible plough according to claim 1, characterised in that the device for applying a moment to the front end of the rear plough frame (2) comprises a horizontal joint arranged in the direction of travel or at an angle to the direction of travel and connected to the supporting device via a connecting member (97).

19. A reversible plough according to claim 18, characterised in that the rigid connecting member (97) is mounted on the stirrup (71) via a universal joint (104) and on an angle lever (99) via a universal joint (98), the angle lever (99) being mounted on a support (84) so as to be pivotable about a horizontal axis (80), the support (84) being mounted on the front plough frame (1) so as to rotate about a horizontal axis (83) substantially aligned with the axis (70).

## Revendications

1. Charrue réversible semi-portée ou attelée, comportant :
- un cadre de charrue avant (1) et un cadre de charrue arrière (2) reliés par une articulation (3) disposée dans le plan de symétrie du cadre de charrue (1, 2),
- un dispositif d'appui, disposé dans la moitié arrière de la charrue réversible et comprenant au moins une roue (4),
- et comportant un dispositif de guidage en profondeur pour le cadre de charrue arrière (2),
caractérisée en ce que, dans la zone de l'articulation (3), il est prévu un dispositif au moyen duquel on peut exercer, pendant le labour, pour charger le cadre de charrue arrière (2), un couple appliquant le cadre de charrue arrière (2) sur le sol, ce couple étant constant sur le domaine de pivotement de ce cadre de charrue.

2. Charrue réversible suivant la revendication 1, caractérisée en ce que le dispositif destiné appliquer un couple est réalisé double pour agir dans les deux positions de travail.

3. Charrue réversible suivant la revendication 1 ou la revendication 2, caractérisée en ce que le dispositif destiné à appliquer un couple comporte un organe intermédiaire (6) monté tournant sur l'articulation (3), cet organe intermédiaire étant relié au cadre de charrue avant (1) au moyen d'une entretoise (7) modifiable en longueur, ayant, à sa partie arrière, une forme de fourche et entourant le cadre de charrue arrière (2) avec intercalation chaque fois d'au moins un organe élastique (8) (figure 3).

4. Charrue réversible suivant la revendication 3, caractérisée en ce que l'entretoise (7) est réalisée sous la forme d'un vérin hydraulique qui est relié à au moins un accumulateur à gaz (34).

5. Charrue réversible suivant la revendication 3 ou la revendication 4, caractérisée par des butées d'extrémité destinés à limiter l'angle de pivotement du cadre de charrue arrière (2).

6. Charrue réversible suivant la revendication 1 ou la revendication 2, caractérisée en ce que le dispositif destiné à appliquer un couple comporte un organe intermédiaire (9) monté tournant sur l'articulation (3) et dont l'extrémité arrière est réalisée en forme de fourche en formant des butées latérales (10), et dont l'extrémité avant s'appuie sur le cadre de charrue avant (1) par l'intermédiaire d'une entretoise (11) réglable en longueur et dont la longueur peut être modifiée de façon élastique (figure 4).

7. Charrue réversible suivant la revendication 6, caractérisée en ce que l'entretoise (11) est réalisée sous la forme d'un vérin hydraulique comportant une précontrainte par gaz des deux côtés du piston.

8. Charrue réversible suivant la revendication 1 ou la revendication 2, caractérisée en ce que le dispositif destiné à appliquer un couple comporte un organe intermédiaire (13) monté tournant sur l'articulation (3) et présentant une plaque sur laquelle sont montés des organes (14), écartés et pouvant s'appuyer élastiquement contre le cadre arrière (2), cette plaque pouvant être placée dans l'une de deux positions de précontrainte (figure 5).

9. Charrue réversible suivant la revendication 1 ou la revendication 2, caractérisée en ce que le dispositif destiné appliquer un couple comporte une pièce pivotante (19), en appui sur l'axe horizontal (20) de la roue arrière (4) par l'intermédiaire d'un excentrique et pouvant s'appuyer contre des butées à ressort (21) du cadre de charrue arrière (2) (figure 8).

10. Charrue réversible suivant la revendication 1 ou la revendication 2, caractérisée en ce que le dispositif destiné à appliquer un couple comporte un organe formant coulisse (23), en forme de fourche, se prolongeant vers l'avant et fixé au cadre de charrue arrière (2), cet organe enveloppant une butée (24) du cadre de charrue avant (1), tandis qu'un organe d'actionnement (22), réglable et déformable élastiquement, est monté sur l'organe formant coulisse (figure 9).

11. Charrue réversible suivant la revendication 10, caractérisée en ce que l'organe de réglage (22) est réalisé sous la forme d'un piston hydraulique à double effet (25), précontraint pneumatiquement.

12. Charrue réversible suivant la revendication 11, caractérisée en ce que le piston hydraulique (25) est équipé d'un bloc de verrouillage (26).

13. Charrue réversible suivant la revendication 1, caractérisée en ce que le dispositif destiné à appliquer un couple comporte, à l'extrémité avant du cadre de charrue arrière (2), une articulation (70, 71) disposée horizontalement dans la direction de déplacement, ou oblique par rapport à cette direction, cette articulation étant reliée au dispositif d'appui par l'intermédiaire d'un organe élastique de mise en tension (72).

14. Charrue réversible suivant la revendication 13, caractérisée en ce que l'organe de mise en tension comporte un bloc-ressort (73).

15. Charrue réversible suivant la revendication 14, caractérisée en ce que, dans l'organe de mise en tension, est intercalé un vérin hydraulique (74) pour soulever le cadre de charrue arrière (2) lors du relèvement de la charrue réversible.

16. Charrue réversible suivant la revendication 13, caractérisée en ce que l'organe de mise en tension comporte un vérin hydraulique (76) relié à un réservoir de gaz sous pression (75).

17. Charrue réversible suivant la revendication 1, caractérisée en ce que l'articulation (3) comporte un étrier (77) entourant, en forme de U, l'extrémité arrière du cadre avant (1), cet étrier étant muni de butées (78) pour limiter le mouvement de pivotement.

18. Charrue réversible suivant la revendication 1, caractérisée en ce que le dispositif destiné à appliquer un couple comporte, à l'extrémité avant du cadre de charrue arrière (2), une articulation disposée horizontalement dans la direction de déplacement, ou oblique par rapport à cette direction, cette articulation étant reliée, par un organe de liaison (97) au dispositif d'appui.

19. Charrue réversible suivant la revendication 18, caractérisée en ce que l'organe de liaison (97), qui est rigide, est relié, par l'intermédiaire d'un cardan (104), à un étrier (71) de l'articulation, et, par l'intermédiaire d'un cardan (98) à un levier coudé (99), lequel est monté sur un support (84) en pouvant pivoter autour d'un axe horizontal (80), ce support (84) étant lui-même monté tournant sur le cadre de charrue avant (1), autour d'un axe horizontal (83) qui est essentiellement aligné avec l'axe (70) de l'articulation.
